# EUROPEAN PATENT APPLICATION

(11) **EP 1 752 922 A1**
(43) Date of publication of application: **14.02.2007**
(21) Application number: 06016274.0
(22) Date of filing: 04.08.2006
(51) Int. Cl.: G06Q 10/00

(54) **Software to be employed in the educational trade**

(30) Priority: 12.08.2005 US 202520
(71) Applicant: Conect Education Systems Inc., Las Vegas NV 89103 (US)
(72) Inventor: Cavalcanti, Jorge Luis Liausu, Recife Pernambuco 50710-440 (BR); Alves, Mario, Recife Pernamubuco 51021-370 (BR); De Andrade, Angela Maria, Rio de Janeiro Rio de Janeiro, 20531-005 (BR)
(74) Representative: Nuss, Pierre

(57) **Abstract**

Software to be employed in the educational trade, which is characterized by the fact that it comprises the following tools: 1) "ConectChange" and "ConectCreate" for teacher=s version; 2) "ConectChange" and "ConectCreate" for students= version; 3) "ConectPlanet"; 4) "ConectActivities"; and 5) "ConectVirtual", wherein the Operational Environment may use Windows Platform; the present software may employ one of the languages of the set that comprises the programming languages ASP and Java Script.

## Description

The present report is related to a patent for Privilege of Invention that describes software particularly addressed to the educational trade, which has the object to allow or introduce a range of vantages in school activities involving teacher and students.

As it is well know by the art, in the educational trade teachers are limited to use readymade and authorship educational software or software dependent on production of subjects, classes or activities they would like to work or develop with their students.

In general, readymade educational software does not allow teachers to obtain the flexibility of use required, and even encumbers adapting classes to students' needs.

Otherwise, mostly authorship software has not much "friendly" interface, causing in practice difficulties of using by the teacher.

In the face of such inconveniences, a new online learning "environment" has been developed, which helps teachers, as well as their students, since it allows using of web resources on the pedagogical process, which occurs simply and practically, being this new "environment" the central object of the present patent of Privilege of Invention.

Considering this, the present program has been developed, which provides a set of organized tools to be used in a classroom environment and even at home, thus aiming to create a new space for interaction that promotes new ways to provide knowledge (from teachers' point of view) and acquire knowledge (from students' point of view).

The present software is provided with the tools listed below, which are defined as:
1) "ConectChange" and "ConectCreate" for teacher=s version;
2) "ConectChange" and "ConectCreate" for students= version;
3) "ConectPlanet";
4) "ConectActivities"; and
5) "ConectVirtual".

From the point of view of the range of themes treated and implemented by the present software, the dynamics provided by the integration of the tools mentioned is what distinguishes this patent of Privilege of Invention if compared with the related art.

This interaction allows teachers and students to use the web resources with such new readiness regarding educational software and allows latter to overcome the barriers established by technological difficulties.

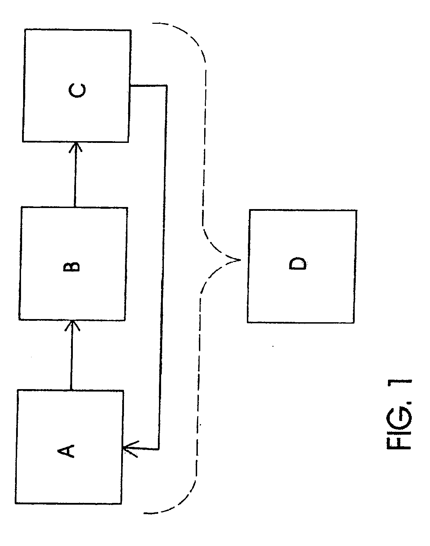

Figure 1 is a flow diagram depicting the steps of this invention.

The present software can be understood in its innovating nature in Fig. 1, which permits to show schematically how the integration of the tools, which compounds the present software can provide classroom activities with dynamism.

The graph shown in Fig. 1 four basic blocks are listed, which are indicated by references A, B, C and D.

The "A" block represents the condition wherein the teacher prepares his/her class using the proposed content, which can be imported from a school database, a university database, or from a course, enabling this content to be modified by the teacher on a online basis, creating or adapting his/her class through "ConectChange" or "ConectCreate".

The "B" block, linked to "A" block, corresponds to the condition wherein, from the class prepared by the teacher, the students will be able to develop papers and activities based on the class given and available contents, using "ConectChange" and "ConectCreate".

This "B" block also represents the condition wherein through the same "ConectPlanet" environment the teacher will also be able to suggest a plentiful experience interchange among students in the same class, in different classes or different schools, promoting team activities, having the contents developed in their classrooms as start.

The "C" block, sequentially linked to "B" and "A" blocks, corresponds to the condition wherein the teacher evaluates, organize recuperation and mock tests using "ConectActivities".

The "D" block corresponds to the condition wherein, during all the process occurred and described in blocks "A", "B" and "C", the "ConectVirtual" software is managing and storing the creations originated from the classes prepared by the teacher and from other contents made available by the teacher.

This "D" block yet corresponds to the condition wherein all students' creations, projects and evaluations are automatically recorded in the folders of each user B the "ConectVirtual" portfolio.

On the process above described, the following aspects can be observed:
a) every time the teacher uses "ConectChange" to prepare or modify a class, he/she will be provided with more readiness, since he/she will count with the original class and the other ones which have been modified and will create a big personal or collective file.
b) schools from the same group will be able to share this plentiful production among them;
c) through "ConectPlanet", schools will be able to share projects and change experiences;
d) in the end of every school year, each user will obtain a great personal portfolio with his/her works and creations, which can be recorded in a CD-ROM.

The "ConectChange", in students' and in teachers' version, is a tool that allows (teachers) to plan more creative classes and unite several areas of knowledge, with total freedom to define the sequence of the classroom work, using animations and simulations that ease students' understanding of the contents to be studied. Regarding the teacher-directed version, it is permitted for them to modify an existing class or create a new class in a simple manner that is automatically available on the web.

"ConectActivities" is a tool that enables teachers to elaborate enrichment, recuperation or evaluation activities. The teacher chooses the form of the questions: either multiple choice, with use of "I" or "F", or an essay test.

The referred tool can be used by the teacher in any subject and enables the access to grade graphs by class, percentage of hits per question and yet provides the profile of answers in each question.

The activities can be timed by the teacher and are available for students on the web, on date and time specified by the teacher. The papers developed with the "ConectActivities" tool and the performance achieved by the students is stored in a personal history file.

The "ConectVirtual" tool was developed for that each student has his/her activity and study file throughout his/her school life.

In the referred tool, papers, activities, tests, mock tests and everything the student creates, using technological resources are stored in a virtual space on the Internet.

Very easy to use, this tool serves as a student personal portfolio throughout the school year and, in the end of the latter, the student can record a personal CD-ROM with all his/her school works and the classes created by the teachers using this tools, thus creating a file with information of precious value, which can serve as a consultation, review or recuperation tool.

The "ConectVirtual" provide the students with a customized school file, of each degree coursed, in CD-ROM, for all his/her life.

The "ConectCreate" tool in the students' and teachers' versions enable students to develop papers, using resources like video, texts and images.

"ConectCreate" creates Internet pages that are saved in the student=s year portfolio, i.e., in "ConectVirtual", quickly and easily, through a "friendly" and simple interface.

The "ConectPlanet" tool is an interactive environment that allows information interchange, creation of discussion forums, publishing of projects and papers and creation of virtual communities.

On the referred tool, Blogs (frequently updated web page, composed of small paragraphs chronologically presented, allowing groups to communicate in a organized manner) or Home Pages with projects that are being developed can be created.

The pedagogical use of Blogs brings important innovations to teachers and students, making information significant, since it allows the choice of truly important information for them.

The "ConectPlanet" environment yet allows creating virtual communities, enabling the information interchange among students of several schools and of several countries, being for this reason an innovating environment.

Regarding the Operational Environment and Language, the present software may use Windows Platform and the programming languages ASP and Java Script.

## Claims

1. "SOFTWARE TO BE EMPLOYED IN THE EDUCATIONAL TRADE", which is **characterized by** the fact that it comprises the following tools: 1) "ConnectChange" and "ConectCreate" for teacher's version; 2) "ConectChange" and "ConectCreate" for students' version; 3) "ConectPlanet"; 4) "ConectActivities"; and 5) "ConectVirtual".

2. "SOFTWARE TO BE EMPLOYED IN THE EDUCATIONAL TRADE", according to claim 1, **characterized by** the fact that the "ConectChange", in students' and teachers' versions, allows (teachers) to plan more creative classes and unite several areas of knowledge, with total freedom to define the sequence of the classroom work, using animations and simulations that ease students' understanding of the contents to be studied; regarding the teacher-directed version, it is permitted for them to modify an existing class or create a new class in a simple manner that is automatically available on the web.

3. "SOFTWARE TO BE EMPLOYED IN THE EDUCATIONAL TRADE", according to claim 1, **characterized by** the fact that the "ConectActivities" tool enables teachers to elaborate enrichment, recuperation or evaluation activities; the teacher chooses the form of the questions: either multiple choice, with use of "T" or "F", or an essay test, wherein the referred tool can be used by the teacher in any subject and enables the access to grade graphs by class, percentage of hits per question and yet provides the profile of answers in each question; the activities can be timed by the teacher and are available for students on the web, on date and time specified by the teacher; the papers developed with the "ConectActivities" tool and the performance achieved by the students are stored in a personal history file.

4. "SOFTWARE TO BE EMPLOYED IN THE EDUCATIONAL TRADE", according to claim 1, **characterized by** the fact that the "ConectVirtual" tool enables every student to has his/her activity and study file throughout his/her school life; in the referred tool, papers, activities, tests, mock tests and everything the student creates, using technological resources are stored in a virtual space on internet; the present tool serves as a student personal portfolio throughout the school year and, in the end of the latter, the student can record a customized CD-ROM with all his/her school works and the classes created by the teachers using this tools, thus creating a file with information of precious value, which can serve as a consultation, review or recuperation tool; the "ConectVirtual" provide the students with a customized school file, of each degree coursed, in CD-ROM.

5. "SOFTWARE TO BE EMPLOYED IN THE EDUCATIONAL TRADE", according to claim 1, **characterized by** the fact that the "ConectCreate", in the students' and teachers' versions, enables students to develop papers, using resources like video, texts and images; "ConectCreate" creates Internet pages that are saved in the student's year portfolio, i.e., in "ConectVirtual", quickly and easily, through a "friendly" and simple interface.

6. "SOFTWARE TO BE EMPLOYED IN THE EDUCATIONAL TRADE", according to claim 1, **characterized by** the fact that the "ConectPlanet" tool is an interactive environment that allows information interchange, creation of discussion forums, publishing of projects and papers and creation of virtual communities; on the referred tool, Blogs or Home Pages with projects that are being developed can be created; the "ConectPlanet" environment yet allows creating virtual communities, enabling the information interchange among students of several schools and of several countries.

7. "SOFTWARE TO BE EMPLOYED IN THE EDUCATIONAL TRADE", according to claims 1, 2, 3, 4, 5 and 6, **characterized by** the fact that the Operational Environment may use Windows Platform.

8. "SOFTWARE TO BE EMPLOYED IN THE EDUCATIONAL TRADE", according to claims 1, 2, 3, 4, 5 and 6, **characterized by** the fact that the present software may employ one of the languages of the set that comprises the programming languages ASP and Java Script.
